## Europäisches Patentamt
## European Patent Office
## Office européen des brevets

(11) Publication number: **0 150 888**
**A2**

(12)
# EUROPEAN PATENT APPLICATION

(21) Application number: **85200088.4**

(51) Int. Cl.⁴: **F 24 F 11/00**

(22) Date of filing: **29.01.85**

(30) Priority: **02.02.84 US 576433**
**02.02.84 US 576431**
**04.10.84 US 657677**

(43) Date of publication of application: **07.08.85**
**Bulletin 85/32**

(84) Designated Contracting States: **DE FR GB IT SE**

(71) Applicant: **Dumbeck, Robert F., Sr., P.O. Box 548, Elgin Texas 78621 (US)**

(72) Inventor: **Dumbeck, Robert F., Sr., P.O. Box 548, Elgin Texas 78621 (US)**

(74) Representative: **Petri, Stellan, c/o SAB NIFE AB Box 515, S-261 24 Landskrona (SE)**

(54) Computer controlled air consitioning systems.

(57) Building construction techniques are afforded permitting simplified air conditioning with very low energy consumption. Thus, by use of concrete outer wall construction in a house, or the like, placed substantially underground, the concrete temperature assumes the underground temperature, which remains in the interval 21-27°C year around, a preferred temperature for human comfort. The concrete walls are an integral radiating part of a heat pump circulating building air over substantially the entire concrete inner surface area to maintain the building air at the underground temperature. This requires modified building structure to provide air flow passages between inner and outer walls. It also permits heat control by a new method of merely controlling circulating air. This adapts to simplified control by a programmable electronic computer of the circulating air flow in response to sensed input parameters to achieve various goals defined by algorithms processed in the computer, based upon historical performance and/or current conditions and goals set by manual control of thermostats, or long term defined controls, in particular for the protection of the concrete walls against deterioration due to drastic changes in humidity such as may be incurred in the wintertime by scavenging moisture from the walls or in drought periods by lack of moisture in the ground.

## COMPUTER CONTROLLED AIR CONDITIONING SYSTEMS

**Technical Field**

This invention relates to air conditioning systems for concrete walled buildings and more particularly it relates to circulating air types of air conditioning systems, mixing fresh atmospheric air into the air circulation flow path and computerized controls for achieving controls with energy savings.

**Background of the Invention**

Concrete is a desirable buildings material, since it is inexpensive, can be shaped readily, is strong, and requires no special expertise or critical materials. It becomes a particularly advantageous building material for houses built at least partly underground, since the concrete can serve to maintain the outer wall temperature. However, very inexpensive heating and cooling that might be provided because the underground temperature is cooler in the summertime and warmer in the wintertime cannot be attained with conventional building practices.

Although the concrete serves to maintain the underground temperature, conventional studs, fire breaks and insulation are inserted between the outer house walls and the rooms. I have found that this defeats the advantage of heat conduction through the concrete walls from the ground into the house. Furthermore, the conventional construction techniques cause the concrete to sweat and accumulate moisture, which rots out the inner wall studs, etc. In addition, concrete walls deteriorate rapidly when the concrete humidity level is lowered such as in the summertime or in a drought, since the moisture that must come from the ground may not be there. To lengthen the life of concrete walls therefore, the humidity of the concrete must be externally controlled. That has not been done in the housing industry because of the impracticability and cost of concrete care.

For many years now tightly closed houses have been customary to prevent energy losses. It has not been uncommon in such houses to have suffocations because of low oxygen levels when the houses are closed for long time periods without entry of fresh atmospheric air. Accordingly, attention need be given to the need for oxygen and fresh air in a manner consistent with efficient use of energy.

Advanced trends toward energy efficiency provide housing with underground walls having concrete walls in thermal contact between the earth and the house interior circulating air temperature maintenance system to maintain a moderate year around temperature. However, in these houses humidity presents a serious problem both in dry and damp conditions. Sweating caused when humidity becomes too high can cause mildew and damage to property and clothes. Also, it is uncomfortable for house occupants. Alternatively, when humidity is too low, the concrete walls become damaged and lose strength and the bond between the outside surface of the walls and earth may part or crack and cause leakage problems after rains. Humidity control thus becomes critical.

Modern technology has supplied automatic air conditioning for houses to keep temperatures and humidity in a personally selected comfort range. For example, US-A-3 326 464 provides an air circulation air conditioning control system that responds to low humidity by humidifying the circulating air. This system also provides control of fresh air intake into the circulating system for the purpose of reducing humidity. Similarly, US-A-3 547 348 provides separate computers for automatic humidifying and dehumidifying control of circulating air.

Both oxygen and negative ions are supplied during operation of an air conditioner unit shown in US-A-3 758 029 to counteract air pollution and consumption by occupants. The bottled oxygen source is cut off in the case of fire. Thus, the need for controls compensating for air consumption and pollution by an air conditioning system is known.

Thermostatic control of an air flow path admitting atmospheric air for ventilation purposes in response to automatically controlled air mixing valve structure is provided in US-A-3 758 368. Humidification and dehumidification are also automatically controlled. Energy efficiency improvement is attained by use of outdoor air as a cooling source when the outdoor temperature is proper.

US-A-4 037 783 provides an air mixing valve system responsive to outside air temperature for keeping constant the volume of fresh air mixed into the circulating air of a temperature control system, applicable when official standards require a fixed percentage of fresh atmospheric air mixed with circulating air of an air conditioning system for the purpose of maintaining an adequate oxygen level within a dwelling.

Computerization of the various desired air conditioning functions is illustrated by US-A-4 227 645, wherein various algorithms control computer operation to produce a control condition based upon the personal temperature, weight, etc. of occupants of the enclosure being air conditioned from selection of heating and ventilator options under summer or winter options.

In the prior art, however, there are significant deficiencies in achievement of a comprehensive system that balances the needs for automatic temperature, humidity and fresh air control meeting personal comfort and safety conditions with the operating efficiency of energy expended. More specific deficiencies include the problem of safety from oxygen deficiency in tightly sealed housing units. For example, conventional air conditioning systems concerned with operating energy efficiency in winter hookups avoid the entry of cold atmospheric air, and use fresh air entry when outside to inside temperature differentials show that the air temperature will move the temperature toward a predetermined desired operating range. That mode of operation, as aforesaid, can lead to suffocation from deficiency of oxygen, particularly with fossil fueled furnaces which consume oxygen in heating being heavily used in cold winter conditions.

Additionally, although automatic humidity controls are well known, the conventional modes of control basically are for summer-winter hookups to dehumidify in the warm summer days and to humidify in cool winter days when heaters are on. There have not been humidity controls that satisfactorily operating in a mode or capacity to maintain humidity in a comfort range throughout all encountered conditions in housing with a large percentage of concrete walls in thermal contact with the earth and thus affording high humidity and sweating inside the housing enclosure, where humidity control is critical not only to comfort but also to preservation of the concrete walls.

There is a deficiency of prior art systems providing for air conditioning system corrective response to the presence of stale or foul air within the air conditioned enclosure.

The computerized air conditioning systems of the prior art are inefficient and cumbersome and are not easily adaptable to the interfacing with the sensor-controllers such as thermostats or humidistats and the various controlled elements such as fans, heaters, coolers, humidifiers, etc. nor are they comprehensive in nature for achieving complex control features in an efficient manner to synergetically reducing control hardware.

All prior art systems are such that great amounts of energy are necessary. It is not known in the prior art how to achieve a comprehensive automatic air conditioning system with substantially no operational energy cost.

It is therefore a general objective of this invention to correct the aforesaid deficiencies of the prior art by providing an improved computer controlled air conditioning system. Further objects, features and advantages of the invention will be found throughout the description, drawings and claims.

**Disclosure of the Invention**

Concrete as used in conventional building structures is not protected against drastic changes of humidity, which can cause cracking and catastrophic failure particularly when in contact with the ground, as set forth for example in US-A-3 543 459. This invention provides humidity control for concrete, and more specifically for concrete building walls.

Furthermore, this invention provides improved building construction affordling low-energy heating and cooling costs by means of transfer of ground temperature through underground concrete walls into a building. Thus, typically a $25^{\circ}C$ earth temperature may only vary $\pm 1^{\circ}$ over summer and winter, whereas air temperatures may easily vary from $-32^{\circ}C$ to $+38^{\circ}C$. Accordingly, by use of air circulating past large surfaces of concrete walls, a heat pump effect is created for maintaining the building temperature at within a comfortable range without the need for expensive or extensive control equipment. Simply by means of air circulation control without compressors or heat exchange equipment then both summer and winter heat exchange is attained with little added energy from electrical or fossil sources.

Building construction techniques then are changed to provide full air circulation past the inner surfaces of outer concrete walls. By expansion of an air conditioning system therefore to include humidity control, the concrete wall building structure including that in contact with the ground is protected against catastrophic and/or erosion damage due to humidity changes in the concrete.

A simple, inexpensive, comprehensive automatic computer controlled air conditioning system processes circulation of air through an enclosure such as a house to establish desired ranges of temperature, humidity and oxygen. A programmable micro-processor responds to the basic sensed air quality

parameters (temperature, humidity, $O_2$) with suitable algorithms to produce basic control signals for actuating air modification hardware (humidity control means, heating means and fresh air inlet means). The computer thus serves to optimize control ranges for each parameter, to observe and make decisions in the presence of interacting factors affecting occupant comfort and safety (such as temperature and humidity or oxygen level and temperature), to provide overall efficiency of operation and to establish a comprehensive sampling control procedure.

The basic control mode circulates air at a predetermined flow rate continuously through a flow path in which the desired air parameters are modified by control of appropriate heating, cooling and venting equipment. The system efficiency is such that for a housing unit with underground concrete walls in thermal contact with the earth to establish a year round moderate enclosure temperature, substantially no energy need be purchased for normal chronic operational conditions. This is achieved by efficiency such that a small battery operated DC motor can drive the system with the battery being recharged from solar energy.

**Brief Description of the Drawings:**

Throughout the various figures of the drawing, like reference characters are used to indicate similar features thereby to facilitate comparison. In the drawings:

Figure 1 is a block diagram of a preferred embodiment of an energy efficient comprehensive air conditioning system embodying the invention;

Figure 2 is a further block diagram embodiment of the invention;

Figure 3 is a fragmental block circuit diagram view illustrating an alternative fresh air venting control mode;

Figure 4 is a system air flow path diagram;

Figure 5 is a computer system diagram;

Figure 6 is a diagrammatic sketch of an underground house embodying a circulating air type of air conditioning system in accordance with this invention; and

Figure 7 is a diagrammatic view in section of a building with underground concrete walls in thermal heat exchange relationship with air circulating on the interior wall surfaces as afforded by this invention.

**The Preferred Embodiment**

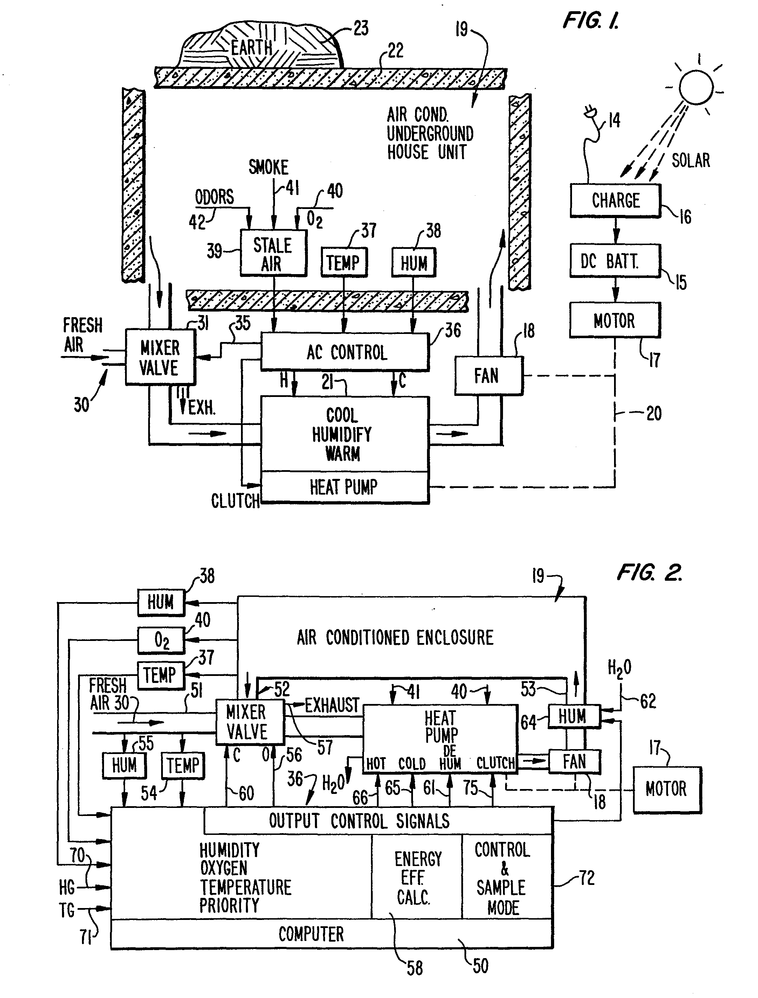

The present invention has among its objectives, very low energy cost and simplified low cost installation of a comprehensive air conditioning system for controlling temperature, humidity and oxygen content of the interior house climate. Thus, Figure 1 illustrates the basic system meeting these objectives.

For example, it may be seen that the system is operated from a battery 15 charged by solar energy with power line charging through charger unit 16 only needed for unusual peak usage conditions. No other such power efficient comprehensive air conditioning system for full winter-summer heating and cooling is known in the art. No other such comprehensive system has the capacity to operate in the presence of extended time power outages, for example, and still control critical oxygen levels within a dwelling. As a reference to this feature, operation is based upon one DC motor 17 circulating about 10 m$^3$/min of air by means of continuously operating fan 18 to a 74 m$^2$ duplex house interior 19, resulting in a complete air exchange every eighteen minutes. The motor drive system 20 also operates the compressorless heat pump exchange unit 21 for cooling, heating and dehumidifying to contribute to the low energy expenditure.

Also contributing to low energy expenditure is the housing construction, namely concrete walls 22 in thermal contact with the earth 23 to establish moderate wall temperatures year around. These walls are in thermal contact with the circulating air as a heat pump exchange surface which thus constitutes an important interacting element of an efficient air conditioning system by supplying cooling temperatures in summer and heating temperatures in winter.

However, this particular housing construction feature contributes a critical factor not present in conventional air conditioning systems, namely critical dependency upon a controlled humidity level. Thus, in higher humidity summer conditions the cooler concrete walls will tend to sweat and thus encourage mold, mildew, etc. if not controlled. One factor in control is the limitation of circulation of outside high moisture bearing air 30 admitted by valve 31 into the circulation flow path under control means 35 operated by an air conditioner central decision control system 36 in response to sensed inputs from thermostat 37, humidistat 38 and stale air detector 39 located inside house 19. Another is the dehumidification capacity of the heat pump 21 which is controlled to keep the humidity of the circulating air inside the house 19 at a predetermined optimum level.

During winter or draught conditions the humidity conversely may become too low, and thus the system also provides for humidification of the circulating air. This is important also to preserve the concrete walls 21 which may not absorb enough moisture from the earth to prevent enough dryness that the concrete strength deteriorates and the walls erode.

As before discussed, adequate oxygen level in a tightly closed housing unit, such as this, is critical for human health. Thus, the stale air detector 39 senses oxygen 40 and serves to control the oxygen level inside the house 19. Also, smoke from fire, cooling, etc. can be sensed at 41 and other undesirable odors such as cooking odors, onions, etc. can be sensed at 42 all for control of fresh air input at mixer valve 31 in accordance with a priority schedule established by the control center 36. Preferably the control center 36 is comprehensive enough to determine emergency conditions for immediate action, slowly changing conditions for continuous control and to administer priorities for effecting efficiency of energy expenditure in the system.

Also energy efficiency is attained in the system interaction because the various control decision functions are made with energy efficient devices such as an electronic computer central decision control device 36 and few mechanical controls such as simply air vent mixer valve 31 and a clutch or other heat pump activating control 45, which are momentarily actuated from time to time as programmed by the decision control portion 36.

Thus, it may be seen that it is for the first time possible to operate a fully comprehensive air conditioning system from a solar charged electric battery 15 with little need to draw extra energy from the power line 14, except for peak periods or unusual atmospheric conditions limiting available solar energy.

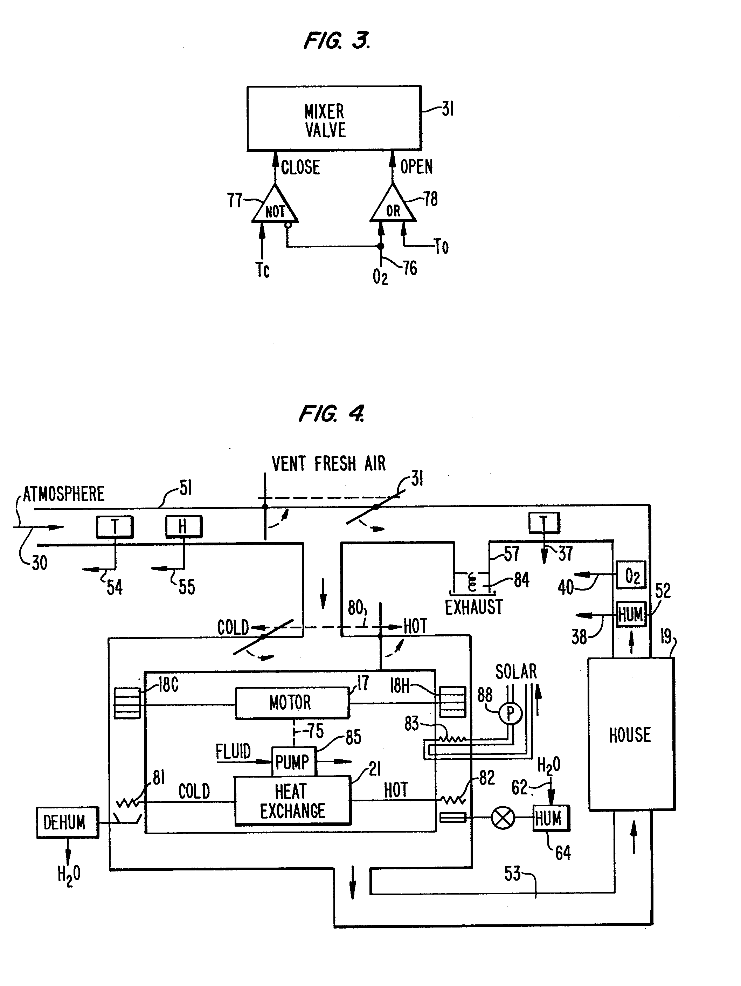

The decision control system as afforded by this invention comprises simply an electronic computer responsive to input temperature, humidity and air quality sensors to control a few basic output controls such as humidity, fresh air and temperature controls, which is operationally shown in block diagram form in Figure 2. Thus, a single standard low cost general purpose programmable computer 50 serves to make operational decisions for a large variety of installations of different thermal capacities, control features and operational complexity levels simply, rapidly and with a minimum of operational equipment and cost. It is particularly advantageous in providing a packaged unit with very simple operational installation. Thus, essentially the entire system can consist solely of a single standard unit connected to a heat pump energy source, such as a well, by two circulation ducts, dwelling input and output air circulation ducts and a fresh air inlet duct, as will be made evident hereinafter. Also, it is most advantageous that the hardware is considerably reduced by the capacity of the computer to make decisions based on any desired set of algorithms and to comprehensively provide operational sequencing energy efficiency decisions, etc.

In this operational system, all elements may be contained in a single compact unit for communication with house 19 by way of connections only to inlet duct 53 and outlet duct 52, the fresh air duct 51, and to heat pump circulation ducts 40, 41. Thus, detectors of in house humidity (38), oxygen (40) and temperature (37), shown for clarity as associated with the house or other air conditioned enclosure 19, may in reality be in the return duct channel 52 wherein air is continually circulating. Similarly outdoor temperature and humidity detectors 54, 55 may be installed in fresh air duct 51 if there be an operation mode with a continuous stream of fresh air flowing into the circulated air which can flow past these detectors. Clearly the installation cost of this system is minimal.

The outside sensors of temperature 54 and humidity 55 provide information from which the computer 50 can calculate the most efficient form of mixing in fresh air if smoke should appear, for example, on a non-emergency mode. In the emergency mode, excluding fire, the computer could decide to open the fresh air valve 31 completely by control 56, thus overriding a conventional program to survey outside temperature and humidity to determine an energy efficient rate of replacement of stale air by exhaust through vent 57. This is designated in the computer complex by the energy efficiency calculation block 58. In control of the oxygen level, except in case of open flame fires in a fireplace, or some other rapid drain of available oxygen, the oxygen level inside the house is servo controlled to an optimum level consistent with normal usage by fresh air valves 56, 60.

Likewise, humidity calculations effect control of the dehumidification, effected generally in the cooler portion of the heat pump 21 at control bus 61 to discharge water as schematically shown. Alternatively for humidification the computer can open water inlet 62 (a further installation connection when used) by control lead 63 to absorb water in the air processed by the heat pump, as shown in house inlet duct 53. Thus, humidifier 64 may simply be a water spray valve or some other known form of humidifier.

The computer 50 likewise controls heat and cooling as effected at controls 65, 66 of heat pump 21. The power of the computer to replace hardware may be illustrated for example by automatic changeover from summer to winter hookup without manual switches, etc., as ascertained by calculations from outside temperature.

Manual selection of predetermined in-house humidity and temperature goals may be entered into the computer for establishing comfort levels as shown at 46, $T_G$ leads 70, 71 if desired. Various priorities may be determined by the computer calculations. For example, should oxygen somehow fall below a desirable treshhold, fresh air may be given priority over heat even if cold outside air is being entered.

The computer program provides the operation sequencing and sampling, etc. as suggested at block 72. Thus, the whole world of memory, past performance, comparative results that can be made available by computer technology leads to entirely new dimensions of control and automation for special purpose installations such as in industrial poultry farms, etc. Also, the computer can control the heat pump by means of a drive clutch to a pump for circulating well water for example as indicated at 75.

Priority decisions can be made by simple hardware if desired, or by alternatives to programmable computer algorithms, such as exemplified in Figure 3 for the fresh air mixer valve 31. The line 76 is indicative of a signal line for a low oxygen condition. It is important that this override any other programmed conditions for preventing the input of fresh air where the $T_O$ signal indicates closure of the mixing valve. For example, if the winter outside air is cold and more inside heat is required, then the $O_2$ signal at 76 in HOT device 77 prevents closure and rather opens the valve by operation at OR device 78 to assure bringing oxygen up to a safe level.

A following set of simple algorithms illustrate the power of the programmable computer 50 to make decisions. The notation sub G is for manual or computer determined goals. Sub i is for inside the house sensor readings. Sub O is for outside ambient atmospheric sensor readings. Control algorithms are not shown because every computer program is in essence a control algorithm. However, the computer presents a wide range of possibilities of selection of sequencing of various decisions, branching and selection sub routines for determining operating efficiency before each decision, etc.

Humidity Control Algorithm –

If $H_G$ > Hi    then – active humidifier

If $H_G$ < Hi    then – active dehumdifier

Oxygen Control Algorith –

If $O_2$ < 0.5    then mix in fresh air

Temperature Control Algorithm –

If $T_G$ > Ti    then activate cooler if Ti < To but mix fresh air
if Ti > To

If $T_G$ < Ti    then activate heater

Priority Algorith –

If $O_2$ < 20.5   mix in fresh air and override all signals for closing fresh air vent.

If $O_2$ > 20.5   and $H_G$ < Hi then activate dehumidifier

If $O_2$ > 20.5   and $H_G$   Hi then activate termperature control algorithm.

Energy Efficiency Algorith –

If $T_O$ > Ti    and heater activation signal is present, branch to open fresh air vent.

If $T_O$ < Ti    and cooler activation signal is present, branch to open fresh air vent.

All parts of the system are well known in the art and are conventionally operated. Various oxygen and air quality sensing instruments are available, such as the digitized gas monitors available from Neotronics N.S., Inc. of Gainesville, Georgia, USA.

A simplified air circulation control unit is set forth in Figure 4 incorporating the synergistic features of fan and heat pump control from a low energy battery operated motor and circulating air system control features. The motor 17 drives rotary fans 18C for cool air circulation and 18H for hot air circulation, depending upon the setting of the hot-cold flow control valve 80. Thus, circulated air flow either past heat pump cool radiator 81 or warm radiator 82, as supplemented in some systems by the solar system radiator 83. On-off control may be effected by way of valve or pump 88. Exhaust air flows out pressure valve 84 when the fresh air mixer valve 31 restricts recirculation flow enough to operate the valve 84 and concurrently opens the fresh air duct 51. Thus, a compact unit driven by motor 17 results, with a drive connection to heat pump 21 circulation pump 85, via control clutch 75 indicated by a dotted line that designates the need to circulate heat pump fluid. The cross referenced features demonstrate the self-contained unit advantages of this invention and the system ducting and installation advantages.

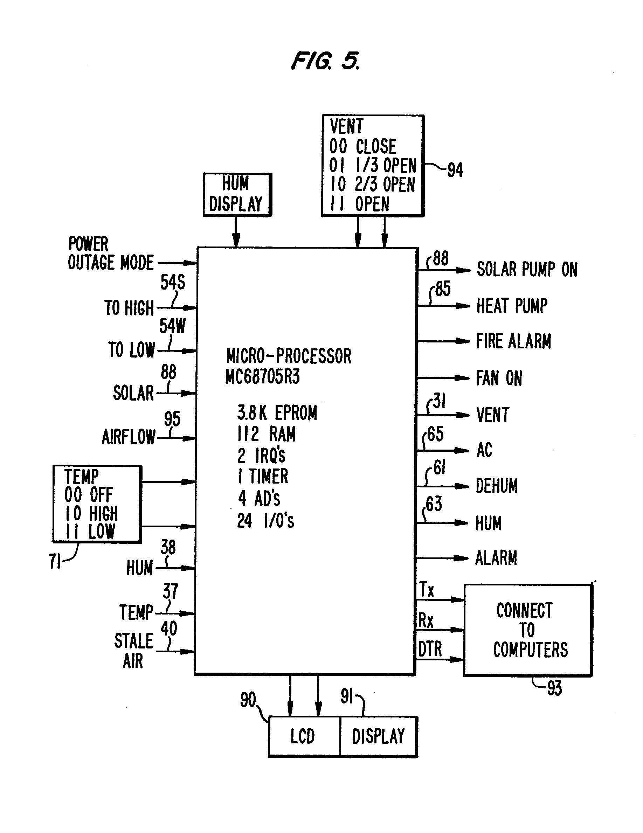

A rich selection of micro-processors is now available for commercial programmable computers. Any such computer such as Motorola MC68705R3 can be simply connected for air conditioning systems of varying features and complexity as indicated by the block diagram of Figure 5. Cross reference numerals carry forward the hereinbefore described control functions. Other manual and supplementary controls may be provided, as well as displays 90, 91, display activators 92 and connections to main computer terminals 93. A normal vent control position may be manually designated at 94, for example. Also, winter or summer operation 54W or 54S may be manually selected. Systems control for the air circulation motor 95, etc. may also be provided. The program algorithms and system capabilities are a function of the programs selected for computer 50.

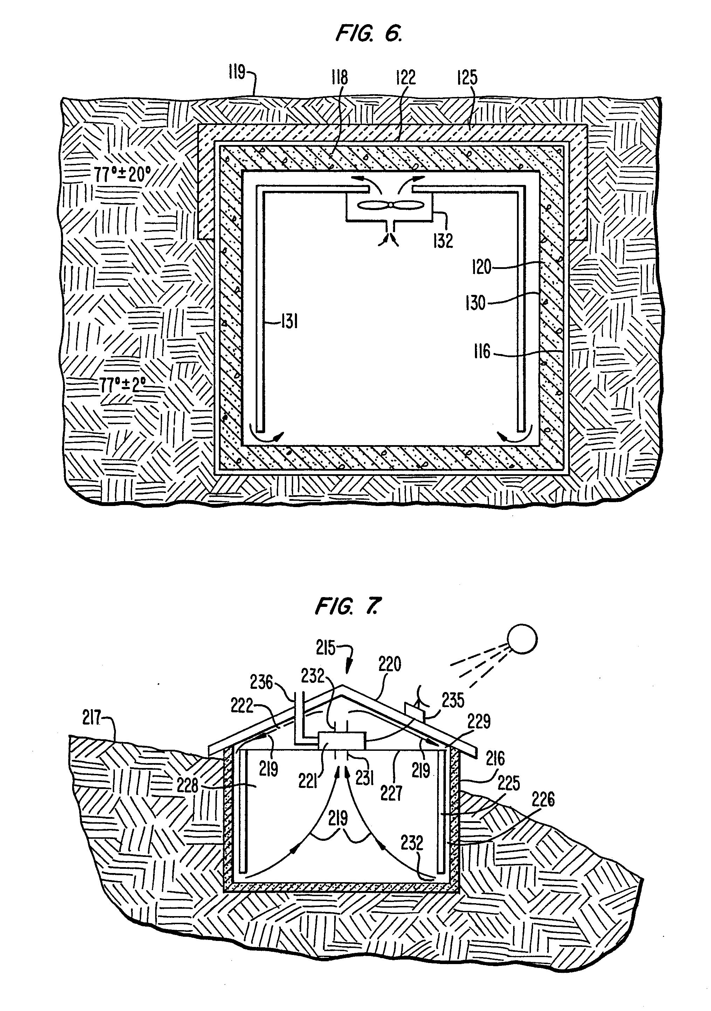

A simplified and efficient system is shown in Figure 6, wherein few controls are needed, since a continuous running of the fan to recirculate air past the concrete walls provides year arond comfortable temperature.

The sketch of Figure 6 represents an underground house or like building, which for simplicity is shown in single room form. For energy efficiency reasons, it is preferred that all the outer wall surfaces 116, including floor 117 and ceiling 118 outer surfaces are disposed under the earth's surface 119. If this is not feasible, then as much of the wall as possible is located underground. All of these walls are of poured concrete, appropriately reinforced, which are conventionally set up in forms in an excavated location into which earth is filled after completion. It is imporant to note for purposes of this invention that the ceiling 118 encompasses the at least three side walls 120, which are at least substantially underground.

After about three weeks, when the poured concrete is dried substantially, the outer wall surfaces 116 disposed underground are sprayed with a thin sealer coating 122 of silicone rubber compound such as "Geocel" brand water seal 2000, which is available from Geocel Corp., Elkhart, Ind., USA. Typically a layer of about 0.03 cm thickness will give a good moisture seal at low cost.

It is noted on the drawing that the underground temperature near the surface 119 is typically $25^{\circ}$ with an $11^{\circ}$ variation summer and winter, which is a comfortable temperature for humans. However, deeper in the earth nearer the bottom portions of the side walls, the summer to winter variation is only about $1^{\circ}$. Since the objectives of this invention include improvement of the thermal heating efficiency of the completed building structure, and since the swing of about $10^{\circ}$ over summer and winter would have to be made up by external energy sources to keep the inside at a constant comfortable temperature, the insulation layer 125 covers the near-surface wall area. This insulation layer 125 is preferably a layer about 0.6 cm thick silicone rubber insulating compound, such as that hereinbefore described. With this construction, good thermal contact between the outer wall surfaces 116 and the deep earth thereby establishes the concrete temperature constant year around at a desired inhouse temperature. For maintaining the ceiling 118 at this temperature, it is thermally bonded with the side walls, which is easily attained with poured concrete walls by the simple expedient of pouring at least the ceiling and side walls from the same batch of poured cement. It is clear therefore that the annual energy cost of any required supplemental thermal energy is substantially reduced by this construction feature.

Further, the internal wall 131 construction is nonconventional, in that the inner decorative walls 131 are so constructed that they do not cover any substantial part of the inner concrete wall surface 130, and that they form an air passageway for circulation of air by fan 132 over substantially the entire inner concrete surface.

This permits, in the simplest form, a very low cost heat pump system with the inner concrete wall surfaces being the principal active energy transfer medium, and the simple fan 132 serving to pump the energy through the house interior, as needed, preferably changing the air volume about four times per hour when there is a large differential temperature. The circulating air simply scavenges energy from the wall surfaces year around to cool in the summer and heat in the winter at very efficient energy cost.

Preferably however there should be a way to exchange the air to replenish spent oxygen. Thus the embodiment of Figure 7 provides for entry of fresh atmospheric air.

In Figure 7 is shown a house 215, or like building, which has concrete outer walls 216 to a substanial extent under the ground sufaces 217 in a thermally conducting relationship to keep the concrete walls 216 at typically a temperature in the inverval 21-27$^{\circ}$C in both summer and winter. Although not shown in this embodiment, the entire house structure except for a front facade may be underground so that the roof is also a concrete underground outer wall. If the roof 220 is not underground it is insulated to keep attic space 222 from following the outside ambient temperature.

In accordance with this invention, substantially the entire inner surface of the underground concrete walls is operated as a heat exchange surface and thus is covered by an air flow path 219 produced essentially by a blower 220 in an air conditioning unit 221 in the attic space 222.

As seen from the section view the inner wall structure 225 of wood or other building materials is separated by air flow passageways 226 between the inner and outer walls. These walls support a ceiling 227 defining the attic 222 and at least one room 228. Also, air flow passages 229 at the top of the inner wall 225 permit air flow from the attic into the air flow passageways 226 between the walls. The return path for circulated air into the blower-air conditioner 221 at inlet 231 is through open air passages 232 substantially along the entire base of the concrete outer walls 216.

The blower of air conditioner 221 then circulates air at a controlled flow rate from room 228 into inlet 231 out port 232 into the attic and about path 219 scrubbing the inner surface of the outer concrete walls in a thermal heat exchange contact to keep the air temperature in the interval 21-27$^{o}$C substantially the same as the underground temperature, whether it be winter or summer. This constitutes a simplified heat pump system using very little energy to transport the air. It has been found that summer and winter a continuous change of the air volume in the house about four times an hour very efficiently effects temperature control to maintain the inside house temperature very close to the underground temperature which was substantially constant at 25$^{o}$C $\pm$ 1$^{o}$ summer and winter.

If desired a solar energy collector unit 235 can be used to supply energy for running the air conditioner 221 and/or to provide supplemental energy for use in air conditioning the rooms 228. Also the air conditioner 221 may have provisions for entering atmosheric air into inlete pipe 236 should the oxygen level in the rooms 228 lower than a predetermined safe threshold.

As coordinated on a long term basis, the humidity is controlled by means of a humidifier-dehumidifier for long term average humidity effect on the concrete to protect it in the manner aforesaid, as an appropriate function of existing sensed humidity and temperature compared with long term history and the goal of average relative humidity of about 50%. This prevents the circulating air from scavenging moisture from the concrete in the low

14

humidity wintertime and also eliminates excess moisture from the circulating air in the high humidity summertime. Other more complex computer programs may be employed, as desired to fit the needs of local system requirements.

Having therefore advanced the state of the art, those novel features believed descriptive of the nature and spirit of the invention are defined with particularity in the following claims.

# CLAIMS

1. An air circulation type air conditioning system, **characterized** in that a concrete building wall in contact with the earth to a depth causing the wall to assume a temperature which does not substantially change from summer to winter is the primary active energy exchange source for establishing an inside the building temperature from air recirculation in thermal exchange with the wall and through the building.

2. The system defined in claim 1, **characterized** in that the concrete underground wall comprises three underground walls and an underground concrete ceiling thermally bonded with said three walls.

3. The system defined in claim 1, **characterized** in that inner walls provide a circulating air space adjacent the concrete walls into which the air is recirculated.

4. The system defined in claim 1, **characterized** in that controllable air circulation means is provided and temperature control means which establishes a desired temperature in response to variations in the circulation flow of the air past the concrete walls.

5. The system defined in claim 1, **characterized** in that air conditioning means controls the humidity of the circulating air within limits to extend the life of the concrete and to prevent condensation thereon.

6. The system defined in claim 1, **characterized** in that air conditioning means comprises valve means for controlling circulating air and temperature sensing means for operating the valve means for controlling the temperature in the building.

7. The system defined in claim 1, **characterized** in that the building air is substantially constantly recirculated to circulate the air volume in the building past the wall about four times each hour.

8. The system defined in claim 1, **characterized** in that humidification means is controlled to maintain a humidity of substantially 50%.

9. The system defined in claim 1, **characterized** in that means provide for detecting the oxygen level in the recirculating air and admitting atmospheric air into the building when the oxygen falls below a predetermined threshhold.

10. The system defined in claim 1, **characterized** in that a computer processes sensed environmental input data to produce output control signals for affecting the condition of the recirculating air, air mixing means provides for mixing in atmospheric air and the computer mixes in the atmospheric air in response to a predetermined algorithm.

11. The system defined in claim 10, **characterized** in that the algorithm provides for maintaining a predetermined temperature range when mixing in atmospheric air.

12. The system defined in claim 10, **characterized** in that the algorithm provides for maintaining a predetermined amount of oxygen in the recirculating air.

13. The system defined in claim 10, **characterized** in that a humidifier is provided and the algorithm provides for maintaining a predetermined humidity range when mixing in atmospheric air.

14. The system defined in claim 10, **characterized** by sensing means responsive to both the recirculating air and the atmospheric air and the algorithm providing for optimizing the mixing of the air to effect energy conservation.

15. The system defined in claim 10, **characterized** by computer control means for establishing priorities for effecting first the desired oxygen level and thereafter the desired temperature level.

16. The system defined in claim 10, **characterized** by control means for mixing fresh atmospheric air into the recirculating air in response to a control signal, and stale air detection means for sensing stale air in said building to generate said control signal for mixing fresh air when air in said building falls below a threshhold value for stale air.

17. The system defined in claim 1, **characterized** in that a DC motor driven fan recirculates the air through the building, a battery drives said motor, and charging means charges the battery, preferably from solar energy.

18. The system defined in claim 17, **characterized** by a heat pump in the air recirculation path connected to the battery for operation and effective to change the temperature of the air in response to sensed conditions in the building.

19. The system defined in claim 1, **characterized** by a comprehensive programmable digital computer programmed to process a plurality of different input signals providing a status codition of the temperature, humidity and oxygen content of the air within or without the building and the desired status in accordance with a corresponding set of algorithms providing a set of control signals for modifying the temperature, humidity and oxygen content of the recirculating air to achieve the desired status.

20. The system defined in claim 19, **characterized** by computer means establishing decisions based upon energy conserving calculations involving interactions between temperature, humidity and oxygen parameters of the air.

**FIG. I.**

**FIG. 2.**

## FIG. 3.

## FIG. 4.

## FIG. 5.

```
              HUM            VENT
            DISPLAY          00 CLOSE
                             01 1/3 OPEN ──94
                             10 2/3 OPEN
                             11 OPEN

POWER                                          ┌88
OUTAGE MODE ──►                         ──► SOLAR PUMP ON
        54S                                    ┌85
TO HIGH ──►          MICRO-PROCESSOR    ──► HEAT PUMP
        54W          MC68705R3
TO LOW ──►                              ──► FIRE ALARM
        88           3.8K EPROM
SOLAR ──►            112 RAM            ──► FAN ON
        95           2 IRQ's                   ┌31
AIRFLOW ──►          1 TIMER            ──► VENT
                     4 AD's                    ┌65
TEMP                 24 I/0's           ──► AC
00 OFF                                         ┌61
10 HIGH                                 ──► DEHUM
11 LOW                                         ┌63
71                                      ──► HUM
        38
HUM ──►                                 ──► ALARM
        37
TEMP ──►                          Tx    CONNECT
STALE   40                        Rx    TO
AIR ──►                           DTR   COMPUTERS
                                               93

                    90      91
                    LCD   DISPLAY
```

0150888

4 / 4

FIG. 6.

FIG. 7.